# EUROPEAN PATENT SPECIFICATION

(11) **EP 2 108 488 B1**
(45) Date of publication and mention of the grant of the patent: **04.05.2011**
(21) Application number: 09003959.5
(22) Date of filing: 19.03.2009
(51) Int. Cl.: B25J 9/10, B25J 17/02, F16C 11/06

(54) **Parallel mechanism with improved ball and socket joints**
Parallelmechanismus mit verbessertes Kugelgelenk
Mécanisme parallèle avec joints à rotule et sièges de support améliorés

(30) Priority: 10.04.2008 JP 2008102966
(43) Date of publication of application: 14.10.2009
(73) Proprietor: Murata Machinery, Ltd., Kyoto-shi, Kyoto 6018326 (JP)
(72) Inventor: Nishida, Tatsuhiko, Kyoto-shi Kyoto (JP); Nakanishi, Hideaki, Kyoto-shi Kyoto (JP); Yamashita, Manabu, Kyoto-shi Kyoto (JP)
(74) Representative: Schoppe, Fritz

(56) References cited:
- EP-A- 1 072 366
- WO-A-00/32363
- JP-U- 8 000 403
- US-A- 3 857 149
- US-A- 4 565 345
- US-A- 5 333 514
- US-A1- 2005 177 279

## Description

### BACKGROUND OF THE INVENTION

### Field of the Invention

The present invention relates to a parallel mechanism, and in particular, to a parallel mechanism including arms coupled together via a ball joint.

### Description of Related Art

A parallel mechanism is conventionally known in which a base portion that is a support base and a bracket with an end effector attached thereto are coupled together in parallel via a plurality of arms. In the parallel mechanism, electric motors are arranged in parallel. Furthermore, a plurality of arms coupled to the respective motors ultimately operate one bracket.

In the parallel mechanism, each of the arms is composed of a link and rods.
The link and each of the rods are coupled together via ball joints. The rods are swingable around the ball joints as a support point in a three-dimensional direction with respect to the link. The tip of each of the rods is coupled to a bracket via the ball joint. This structure allows the link to swing around the ball joints as a support point in the three-dimensional direction with respect to the brackets. Furthermore, in the parallel mechanism, a ball of each of the ball joints is rotatably held with one half side of the ball exposed from a socket, and the two rods are coupled together via a spring. This prevents the ball of the ball joint from coming loose from the socket during swinging of the arm, consequently the swing angle (movable range) of the arm is increased.

A robot device comprising such a device for fixing a bearing means firmly in a three-axle ball and socket joint is disclosed in WO 00/32363. The bearing means is arranged in a housing on the joint socket and the housing includes surface against which the bearing means abuts. Surface is designed with friction-increasing means that grip the bearing means and hold it.

US-A-5333514 discloses a parallel robot comprising a base, three set of arm assemblies disposed on the base at a predetermined spacing, and a bracket member which is supported by the arm assemblies and to which an end effector is attached. Each of the arm assemblies comprises a pair of motors mounted on the base to face each other with a predetermined clearance and a pair of arms which are supported by the motors to be swung, respectively. Each of the arms comprises a first arm portion and a second arm portion. The first arm portion and the second arm portion of each arm are connected with each other through a first ball joint, and the second arm portion of each arm is connected with the bracket through a second ball joint. Each of the ball joints comprises a first joint portion having a ball and a bolt, and a second joint portion having a socket and a supporting member. A distance between the center of the ball and the surface facing the bracket is a predetermined distance. To enlarge the movable range of the ball joints, the distance y is desired to be zero. However, if the distance is too small, the balls tend to come out of the sockets. Therefore, taking machining error into consideration, it is disclosed that the distance is in a range of 0.5-1 mm.

### BRIEF SUMMARY OF THE INVENTION

In the parallel mechanism, the ball of the ball joint and the socket are held by the tensile force of a spring. However, one half side of the ball in the ball joint is exposed from the socket. Thus, when the ball joint is subjected to a load exceeding the tensile force of the spring, the ball may come loose from the socket. This problem is more significant at a position closer to the outer edge of the operating range of the parallel mechanism. In contrast, an increase in the tensile force of the spring increases the sliding resistance of the ball joint. This may increase a load during a high-speed operation and the level of the wear of the ball joint portion. On the other hand, when the ball of the ball joint is covered with the socket along the spherical surface of the ball up to the base end of the ball joint, the maintainability of the parallel mechanism in disassembly maintenance or the like is degraded.

The present inventors have obtained the following knowledge through keen examinations of the above-described problems. That is, an external force exerted on an end effector (bracket) during operation of the parallel mechanism is decomposed into axial loads acting on the respective rods. When an edge portion of the socket engages with the ball but reaches only a position that is closer to the tip of the ball than the equator thereof, a repulsion acts on the socket in a direction opposite to that of the tensile force of the spring. If the repulsion is stronger than the tensile force, the ball in the ball joint may come loose from the socket.

Based on this knowledge, the present inventors have made the present invention as defined in claim 1. Preferred aspects of the present invention described below solve the above-described problems to inhibit the ball joints swingably coupling the arms and the like together from coming loose without degrading the maintainability.

A parallel mechanism according to a preferred aspect of the present invention comprises a base portion and a bracket coupled together in parallel via a plurality of arms and is configured as described as follows. Each of the plurality of arms comprises a first link one end of which is coupled to an actuator attached to the base portion, a second link having paired rods and via which other end of the first link and a bracket are coupled together, a first ball joint via which one end of each of the paired rods composing a second link and the other end of the first link are swingably coupled together, a second ball joint via which other end of each of the paired rods and the bracket are swingably coupled together, and a tensile member biasing the paired rods in a direction in which the rods pull each other. At least one of the first ball joint and the second ball joint has a ball stud including a shaft portion and a ball-like head, and a socket swingably and pivotally movably holding the ball-like head of the ball stud. The socket includes a semispherical recess portion holding the ball-like head from a top portion to an equator thereof, and an extending portion which is smoothly continuous with the semispherical recess portion and which extends from the equator of the ball-like head to the shaft portion side. The socket is formed such that an inner diameter of an opening in the extending portion is equal to or larger than a diameter of the ball-like head.

According to a preferred aspect of the present invention, the parallel mechanism includes the extending portion extending continuously and smoothly from the semispherical recess portion to the socket composing the first ball joint and/or the second ball joint. This enables a reaction force acting on the socket (a reaction force reacting to a load imposed in the axial direction of the rod) to be perpendicularly received, inhibiting a possible repulsion (a partial force of the reaction force with respect to the axial direction of the shaft portion) acting in a direction in which the socket comes loose. The ball-like head of the ball stud, composing the ball joint, can be inhibited from coming loose from the socket. On the other hand, the extending portion is formed such that the inner diameter of the ball-like head of the ball stud, composing the ball joint, is equal to or larger than the diameter of the ball-like head. Thus, for example, for disassembly maintenance, the ball stud can be removed from the socket by pulling the socket outward along the axial direction of the shaft portion of the ball stud with a force stronger than the tensile force of the tensile member. As a result, the ball joints can be inhibited from coming loose without degrading the maintainability.

Here, preferably, the paired rods are arranged such that central axes of the rods are parallel to each other. The extending portion is substantially cylindrically shaped. A central axis of the extending portion extends parallel to a plane defined by the respective central axes of the paired rods and substantially perpendicularly to the respective central axes of the paired rods.

In this arrangement, even if an excessive load is placed in the direction of the central axes of the rods in conjunction with motion of the parallel mechanism, the ball joints can be reliably inhibited from coming loose.

Moreover, length of the extending portion is preferably set according to diameter of the ball-like head.

In this arrangement, the length of the extending portion can be appropriately set. Thus, the ball joints can be appropriately inhibited from coming loose while ensuring the maintainability and the proper movable range of the parallel mechanism.

Furthermore, the length of the extending portion is preferably set according to overall length of the tensile member.

In this arrangement, the length of the extending portion can be appropriately set. Thus, the ball joints can be inhibited from coming loose while ensuring the maintainability of the parallel mechanism.

Other features, elements, processes, steps, characteristics and advantages of the present invention will become more apparent from the following detailed description of preferred embodiments of the present invention with reference to the attached drawings.

### BRIEF DESCRIPTION OF THE DRAWINGS

Figure 1 is a perspective view showing the general configuration of a parallel mechanism according to an embodiment.

Figure 2 is a diagram showing the parallel mechanism as viewed from the direction of arrow A1 in Figure 1.

Figure 3 is a sectional view of a ball joint used in the parallel mechanism according to the embodiment.

Figure 4 is a sectional view of a ball joint used as a comparative example.

Figure 5 is a diagram showing measurement results for an example and a comparative example.

### DETAILED DESCRIPTION OF PREFERRED EMBODIMENTS

A preferred embodiment of the present invention will be described below in detail with reference to the drawings. In the drawings, the same elements are denoted by the same reference numerals, and duplicate descriptions are omitted.

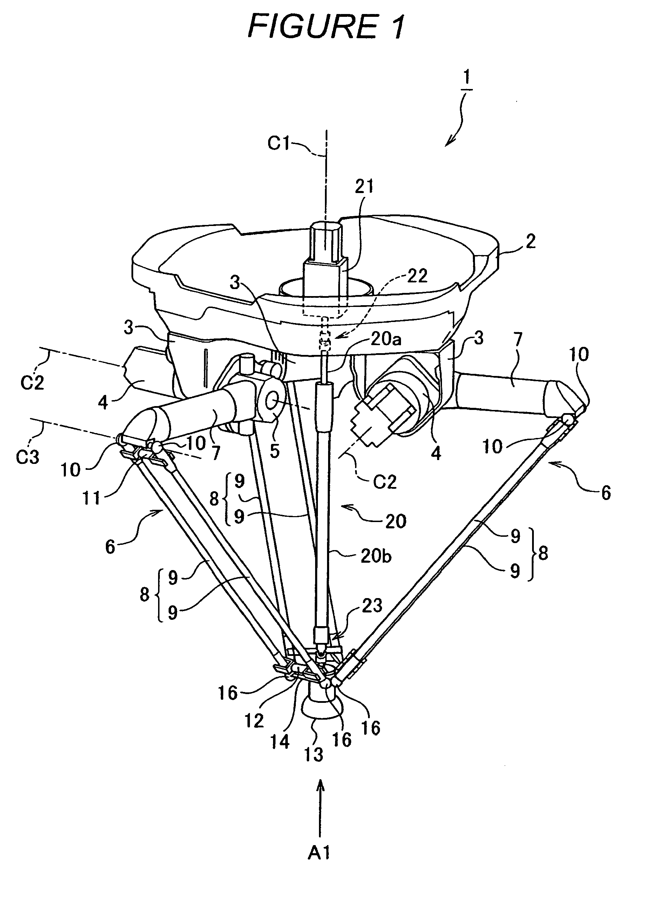

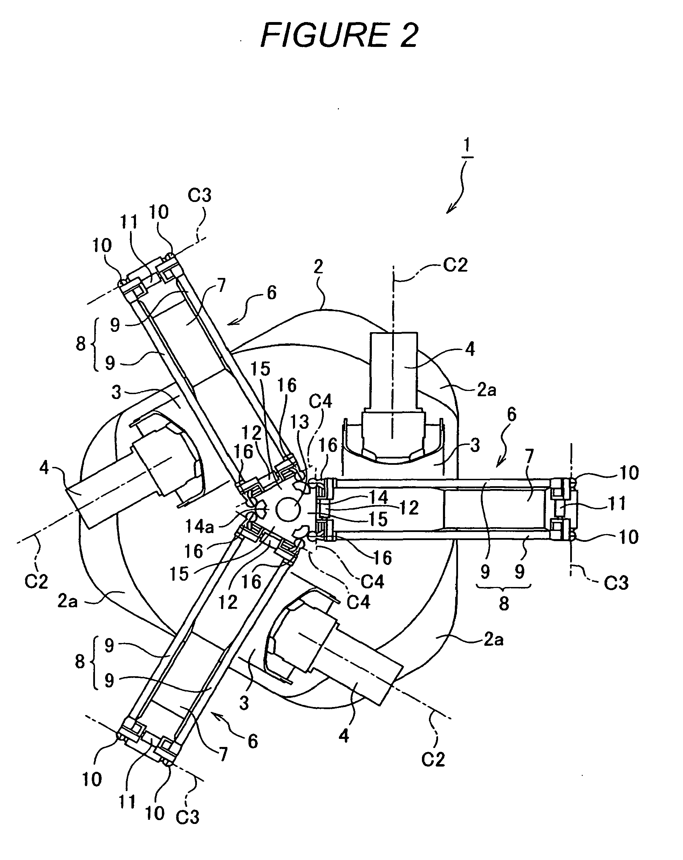

First, the general configuration of a parallel mechanism according to the embodiment will be described with reference to Figures 1 and 2. Figure 1 is a perspective view showing the general configuration of the parallel mechanism 1 according to the embodiment. Figure 2 is a diagram showing the parallel mechanism 1 as viewed from the direction of arrow A1 in Figure 1.

The parallel mechanism 1 has a base portion at the top thereof. The parallel mechanism 1 is supported by fixing a flat mounting surface 2a of the base portion 2 formed on the bottom surface side thereof, to, for example, a flat ceiling. On the other hand, three support members 3 are provided on the bottom surface side of the base portion 2. An electric motor 4 is supported in each of the support members 3. The electric motor 4 is supported such that the axis C2 of a motor shaft is parallel (that is, horizontal) to the mounting surface 2a of the base portion 2. The support members 3 are separated from one another by equal angles (120 degrees) around the vertical axis C1 of the base portion 2. The electric motors 4 are also separated from one another by equal angles (120 degrees) around the vertical axis C1 of the base portion 2 (see Figure 2).

A substantially hexagonal cylindrical arm support member 5 is fixed to an output shaft of each of the electric motors 4 coaxially with the axis C2. The arm support member 5 is rotated around the axis C2 by driving the electric motor 4. Each of the electric motors 4 is connected to an electronic control device (not shown in the drawings). Rotation of the output shaft of the electric motor 4 is controlled by the electronic control device.

The parallel mechanism 1 has three arm main bodies 6. Each of the arm main bodies 6 includes a first arm 7 and a second arm 8. Here, the first arm 7 corresponds to a first link set forth in Claim 1. The second arm 8 corresponds to a second link set forth in Claim 1. The first arm 7 is an elongate, hollow cylindrical member formed of, for example, carbon fiber. The base end of the first arm 7 is attached to a side surface of the arm support member 5. The first arm 7 is fixed so that the axis of the first arm 7 is orthogonal to the axis C2.

The base end of the second arm 8 is coupled to the free end of the first arm 7 so that the second arm 8 is swingable around the free end of the first arm 7. The second arm 8 includes paired elongate rods 9, 9. The paired rods 9, 9 are arranged parallel to each other in the longitudinal direction thereof. Each of the rods 9, 9 is also an elongate, hollow cylindrical member formed of, for example, carbon fiber. The base ends of the rods 9, 9 are rotatably coupled to the free end of the first arm 7 via paired ball joints 10, 10 (which correspond to a first ball joint set forth in Claim 1). An axis C3 connecting the rotational centers of the ball joints 10, 10 at the base ends of the rods 9 is located parallel to the axis C2 of the electric motor 4.

Furthermore, at the base end of the second arm 8, one rod 9 and the other rod 9 are coupled together via a coupling member 11. At the free end of the second arm 8, one rod 9 and the other rod 9 are coupled together via a coupling member 12. Each of the coupling members 11, 12 has, for example, a tensile coil spring as a biasing member to bias the paired rods 9, 9 in a direction in which the rods 9, 9 pull each other. That is, the coupling members 11, 12 function as a tensile member set forth in the claims. The coupling members 11, 12 may have different structures but preferably have the same structure in terms of reduced costs. Each of the coupling members 11, 12 has the function of preventing the rods 9, 9 from rotating around respective axes parallel to the longitudinal direction of the rods 9, 9.

Furthermore, the parallel mechanism 1 has a bracket 14 to which an end effector portion (tool) 13 is pivotally movably attached. The bracket 14 is a substantially equilateral triangular, plate-like-member. The bracket 14 is held by three arm main bodies 6 so that a mounting surface 14a (the bottom surface of the bracket 14 in Figure 1) of the bracket 14 to which the end effector portion 13 is attached is parallel (that is, horizontal) to the mounting surface 2a of the base portion 2.

A mounting piece 15 is formed on each side of the bracket 14. The mounting piece 15 is coupled to the free end (the free ends of the pared rods 9, 9 composing the second arm 8) of the corresponding arm main body 6. The bracket 14 thus swings with respect to the corresponding arm main body 6 around the free end of the arm main body 6. Specifically, an end of each of the mounting pieces 15 of the bracket 14 is coupled to the free ends of the corresponding rods 9, 9 via ball joints 16, 16 (which correspond to a second ball joint set forth in the claims). An axis C4 (see Figure 2) connecting the paired ball joints 16, 16 together is also parallel to the axis C2 of each of the electric motors 4. Thus, the bracket 14 can swing with respect to each of the arm main bodies 6 around the horizontal axis C4. The substantially equilateral triangular bracket 14 is supported by the three arm main bodies 6 so as to be swingable at all the sides thereof around the horizontal axis C4.

The distance between the paired ball joints 10, 10, located at the coupling portions between the first arm 7 and the second arm 8, is set equal to the distance between the paired ball joints 16, 16, located at the coupling portions between the bracket 14 and the rods 9 of the second arm 8. Thus, as described above, the paired rods 9, 9 composing the second arm 8 are arranged parallel to each other all over the length thereof in the longitudinal direction thereof. All of the axes C2, C3, C4 are parallel to the mounting surface 2a of the base portion 2. Thus, regardless of however the first arm 7, the second arm 8, and the bracket 14 swing around the axes C2, C3, C4, respectively, the parallel relationship is maintained between the mounting surface 14a of the bracket 14 to which the end effector portion 13 is attached and the mounting surface 2a of the base portion 2.

In response to instructions from the electronic control device, the rotating position of the arm support member 5 fixed to the output shaft of each of the electric motors 4 is controlled to control the position of the free end of the corresponding first arm 7. The position of the free end of each of the second arms 8 follows the controlled position of the free end of the corresponding first arm 7. This determines the position of the mounting surface 14a of the bracket 14 to which the end effector portion 13 is attached. At this time, as described above, the bracket 14 moves with the horizontal posture thereof maintained.

Furthermore, the parallel mechanism 1 has a turning shaft rod 20 located in the center thereof and extending in the vertical direction, and an electric motor 21 that rotates the turning rod 20. The electric motor 21 is fixed to the base portion 2 with an output shaft thereof directed downward in the vertical direction. One end of the turning shaft rod 20 is coupled to the output shaft of the electric motor 21 via a universal joint 22. On the other hand, the other end of the turning shaft rod 20 is connected to the end effector portion 13 via the universal joint 23. The turning shaft rod 20 is realized by a rod 20a and a cylinder 20b, and configured to be telescopic. Moreover, the turning shaft rod 20 is a ball spline, and thus enables rotation of the rod 20a to be transmitted to the cylinder 20a. Since the universal joints 22, 23 are provided at the respective ends of the turning shaft rod 20, even though the bracket 14 is drivingly moved to a predetermined upward, downward, forward, backward, rightward, or leftward position by the three electric motors 4, the turning shaft rod 20 can move following the predetermined position. The electric motor 21 is also connected to the above-described electronic control device. Rotation of the output shaft of the electric motor 21 is controlled by the electronic control device to control the rotating position of the end effector portion 13.

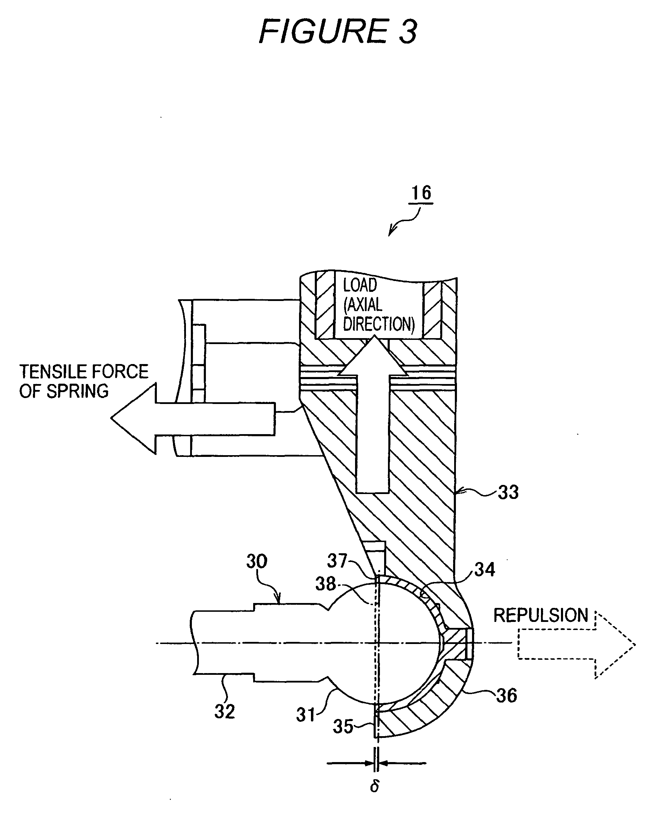

Now, the structure of the ball joint 16, via which the free end of the rod 9 and the bracket are swingably coupled together, will be described with reference to Figure 3. Here, Figure 3 is a sectional view of the ball joint 16. The structure of the ball joint 16 is the same as or similar to that of the ball joint 10, via which the base end of the rod 9 and the free end of the first arm 7 are coupled together. Thus, here, the description of the structure of the ball joint 10 is omitted.

The ball joint 16 has a ball stud 30 made of, for example, steel, a rod 33 serving as a socket member, and a resin cup 37 serving as a receiving portion.

The ball stud portion 30 has a ball-like head 31 with a spherical outer peripheral surface integrally formed at a tip portion thereof. Furthermore, a shaft portion 32 is integrally projected from the ball-like head 31 of the ball stud 30.

The rod 33 includes a socket 36 formed at one end thereof and having a semispherical recess portion 34, and a ring-shaped extending portion 35; the semispherical recess portion 34 has an inner peripheral surface corresponding substantially to the spherical outer peripheral surface of the ball-like head 31, and the extending portion 35 is smoothly continuous with the semispherical recess portion 34. The semispherical recess portion 34, formed in the socket 36, is formed to hold the ball-like head 31 from the tip portion to an equator 38 thereof in a stationary condition shown in Figure 3. The equator 38 of the ball-like head 31 refers to a nodal line between the ball-like head 31 and a plane that is orthogonal to the central axis of the ball stud 30, the nodal line is formed when the plane is located at a position where the diameter of the ball-like head 31 is largest.

The extending portion 35 is substantially cylindrically shaped. The extending portion 35 is formed to extend parallel to a plane defined by the central axes of the paired rods 9, 9 (rods 33, 33) and perpendicularly to the central axes of the paired rods 9, 9 (rods 33, 33). The extending portion 35 is formed to have an inner diameter equal to or slightly larger than the diameter of the ball-like head 31. Furthermore, in the present embodiment, the diameter of the ball-like head 31 is set to 16 mm, and the length δ of the extending portion 35 is set to 0.5 mm. The length δ of the extending portion 35 is preferably set with use conditions, for example, the diameter of the ball-like head 31, the overall length of the coupling member 12 (or the adhesion length of the tensile coil spring, included in the coupling member 12), and a load taken into account.

The resin cup 37 is interposed between both the semispherical recess portion 34 and the extending portion 35, formed in the socket 36, and the ball-like head 31 of the ball stud 30, held in the socket 36. The resin cup 37 is installed so as to tightly contact with the inner surfaces of the semispherical recess portion 34 and the extending portion 35. A suitable resin material forming the resin cup 37 is, for example, a fluorine resin, which offers low frictional properties. Furthermore, any resin other than the fluorine-containing resin which offers high sliding properties, for example, polyacetal (POM) or polyether ketone (PEEK), may be suitably used.

The ball-like head 31 is accommodated and held in the socket 36 to swingably and pivotally movably couple the ball stud 30 to the socket 36. Furthermore, the mounting piece 15 of the bracket 14 is fixed to the shaft portion 32 of the ball stud 30. On the other hand, the tip portion of the rod 9 is inserted into the rod 33 to fix the rods 33 and 9 so as to prevent the rods 33 and 9 from rotating with respect to each other. The other rod 9 paired with the above-described rod 9 and composing the second arm 8 is similarly coupled to the mounting piece 15 of the bracket 14 via the ball joint 16. Thus, the second arm 8 and the bracket 14 are swingably coupled to each other.

An external force exerted on the end effector portion 13 (bracket 14) during operation of the parallel mechanism 1 is decomposed into axial loads acting on the respective rods 9. In the above-described configuration, when a load is imposed on the rod 9 in the axial direction thereof, a reaction force acting on the socket 36 (reaction force reacting to the load acting in the axial direction of the rod 9) is perpendicularly received by the semispherical recess portion 34, formed in the socket 36, and the extending portion 35, which is smoothly continuous with the semispherical recess portion 34. This inhibits a possible repulsion (partial force of a reaction force with respect to the axial direction of the shaft portion 32) acting in a direction in which the socket 36 comes loose.

According to the present embodiment, the extending portion 35, which is smoothly continuous with the semispherical recess portion 34, is formed in the socket 36, composing the ball joint 16. Thus, the reaction force acting on the socket 36 can be perpendicularly received, inhibiting the possible repulsion acting in the direction in which the socket 36 comes loose. Thus, the ball-like head 31 of the ball stud 30 can be inhibited from coming loose from the socket 36. On the other hand, the extending portion 35 is formed such that the inner diameter of the opening in the extending portion 35 is equal to or slightly larger than the diameter of the ball-like head 31. Thus, for example, for disassembly maintenance, the ball stud 30 can be removed from the socket 36 by pulling the socket 36 outward along the axial direction of the shaft portion of the ball stud 30 with a force stronger than the tensile force of the coupling member 12. As a result, the ball joints 16 can be inhibited from coming loose without degrading the maintainability.

In particular, in the present embodiment, the extending portion 35 is substantially cylindrically shaped. The central axis of the extending portion 35 extends parallel to a plane defined by the central axes of the paired rods 9, 9 (rods 33, 33) and substantially perpendicularly to the central axes of the paired rods 9, 9 (rods 33, 33). Thus, even if an excessive load is placed in the direction of the central axes of the rods 9 (rods 33) in conjunction with motion of the parallel mechanism 1, the ball joints 16 can be reliably inhibited from coming loose.

Furthermore, according to the present embodiment, the length δ of the extending portion 35 is preferably set with use conditions, for example, the diameter of the ball-like head 31, the overall length of the coupling member 12, and the load taken into account. Thus, the length δ of the extending portion 35 can be appropriately set. Consequently, the ball joints 16 can be inhibited from coming loose while ensuring the maintainability and the proper movable range of the parallel mechanism 1.

The capability of inhibiting the ball joints from coming loose according to the present embodiment will be specifically demonstrated with reference to an example and a comparative example. In the example and the comparative example, a load (N) was varied which was imposed, in a -Y direction, on the position of the end effector portion, corresponding to coordinates (X, Y, Z) of (450, -260, 860) (mm). Then, the load N at which the any ball joint came loose was measured using a load cell (see the measurement method section of Figure 6).

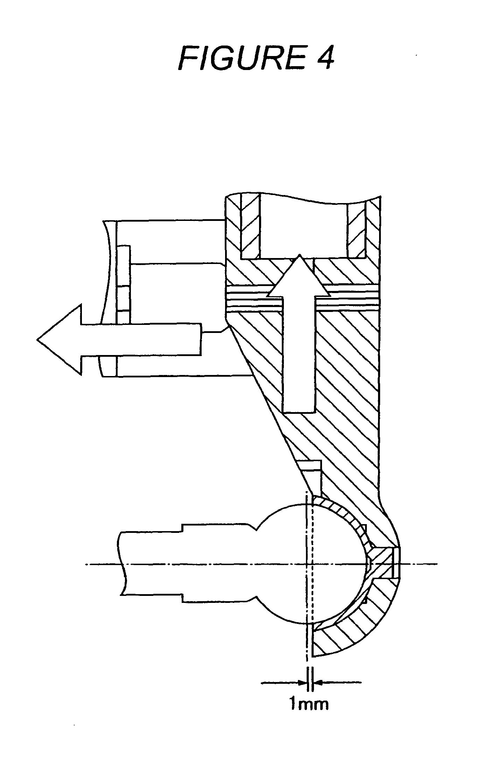

In the example, ball joints having the same structure as that of the ball joints 16 were used. On the other hand, in the comparative example, ball joints (see Figure 4) were used which had no extending portion formed therein and in which the end of the opening of the semispherical recess portion was positioned 1 mm away from the equator toward the tip of the ball-like head in the stationary state shown in Figure 4

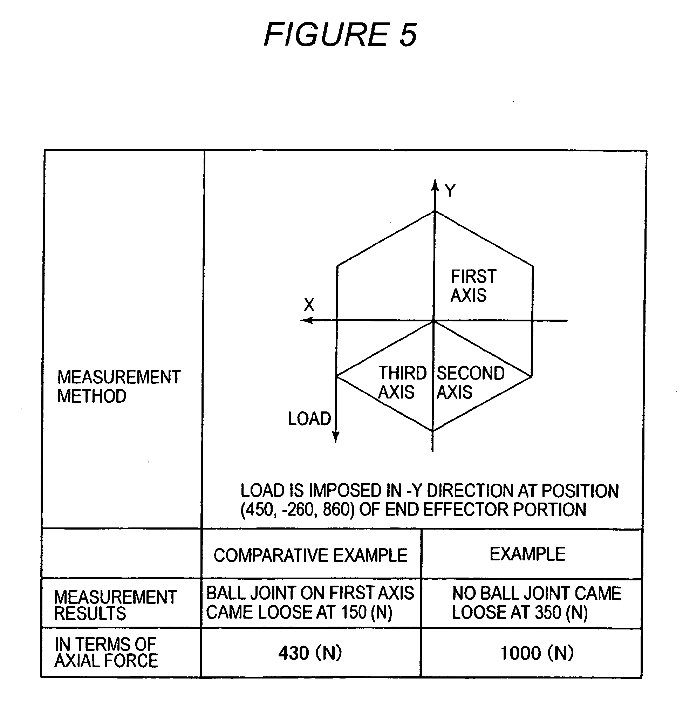

Measurement results are shown in Figure 5. As seen in Figure 5, in the comparative example, the ball joint on a first axis came loose when a load of 150 (N) (430 (N) in terms of axial force) was imposed. On the other hand, in the example, no ball joint came loose even when a load of 350 (N) (1, 000 (N) in terms of axial force) was imposed. Thus, the effectiveness of the present embodiment was confirmed.

The embodiment of the present invention has been described. However, the present invention is not limited to the above-described embodiment. Many variations may be made to the above-described embodiment. For example, in the above-described embodiment, the extending portion 35 is substantially cylindrically shaped. However, the shape of the extending portion is not limited to the substantial cylinder. For example, the extending portion may be formed to appear trapezoidal as viewed from the side surface thereof.

In the above-described embodiment, the ball joint 16, via which the free end of the rod 9 and the bracket 14 are swingably coupled together, has the same structure as that of the ball joint 10, via which the base end of the rod 9 and the free end of the first arm 7 are coupled together. However, for example, with the loads imposed on the ball joints 16 and 10, respectively, taken into account, the ball joints 16 and 10 may have different structures.

While the present invention has been described with respect to preferred embodiments thereof, it will be apparent to those skilled in the art that the disclosed invention may be modified in numerous ways and may assume many embodiments other than those specifically set out and described above. Accordingly, it is intended by the appended claims to cover all modifications of the present invention that falls within the true scope of the present invention.

## Claims

1. A parallel mechanism (1) comprising a base portion (2) and a bracket (14) coupled together in parallel via a plurality of arms (6),
each of the plurality of arms (6) comprising a first link (7) one end of which is coupled to an actuator (4) attached to the base portion (2), a second link (8) having paired rods (9, 9) and via which other end of the first link (7) and the bracket (14) are coupled together, paired first ball joints (10, 10) via which one end of each of the paired rods (9, 9) composing the second link (8) and the other end of the first link (7) are swingably coupled together, paired second ball joints (16, 16) via which other end of each of the paired rods (9, 9) and the bracket (14) are swingably coupled together, and a tensile member (11, 12) biasing the paired rods (9, 9) in a direction in which the rods (9, 9) pull each other, at least one (10, 10, 16, 16) of the first ball joints (10, 10) and the second ball joints (16, 16) has a ball stud (30) including a shaft portion (32) and a ball-like head (31), and a socket (36) swingably and pivotally movably holding the ball head (31) of the ball stud (30), the parallel mechanism being **characterized in that**:
the socket (36) includes a semispherical recess portion (34) holding the ball-like head (31) from a top portion to an equator thereof, and an extending portion (35) which is smoothly continuous with the semispherical recess portion (34) and which extends from the semispherical recess portion (34) beyond the equator of the ball-like head (31) to the shaft portion (32) side,
the socket is formed such that an inner diameter of an opening in the extending portion (35) is equal to or larger than a diameter of the ball-like head (31), and
the extending portion (35) is arranged to receive a reaction force reacting to a load acting in an axial direction of the rod (9) coupled to the socket (36).

2. The parallel mechanism (1) according to Claim 1, **characterized in that** the paired rods (9, 9) of the second link comprising the rod coupled to the socket (36) are arranged such that central axes of the paired rods (9, 9) are parallel to each other, and **in that** the extending portion (35) is substantially cylindrically shaped, and a central axis of the extending portion (35) extends parallel to a plane defined by the respective central axes of the paired rods (9, 9) and substantially perpendicularly to the respective central axes of the paired rods (9, 9).

3. The parallel mechanism (1) according to Claim 1 or Claim 2, **characterized in that** length of the extending portion (35) is set according to diameter of the ball-like head (31).

4. The parallel mechanism (1) according to any one of Claims 1 to 3, **characterized in that** the length of the extending portion (35) is set according to overall length of the tensile member (11, 12).

5. The parallel mechanism (1) according to any one of Claims 1 to 4, **characterized in that** the ball stud (30) is made of steel, and a cup (37) made of resin is installed an inner surfaces of the semispherical recess portion (34) and extending portion (35) of the socket (36) and the cup (37) is interposed between the ball-like head (31) of the ball stud (30) and both the semispherical recess portion (34) and extending portion (35) of the socket (36).

6. The parallel mechanism (1) according to Claim 5, **characterized in that** a resin material for the cup (37) is a fluorine resin.

7. The parallel mechanism (1) according to any one of Claims 1 to 6, **characterized in that** the extending portion (35) of the socket (36) is 0.5 mm in length.

## Patentansprüche

1. Ein Parallelmechanismus (1), der einen Basisabschnitt (2) und eine Halterung (14), die über eine Mehrzahl von Armen (6) parallel miteinander gekoppelt sind, aufweist,
wobei jeder der Mehrzahl von Armen (6) ein erstes Verbindungselement (7), von dem ein Ende mit einem Betätigungselement (4) gekoppelt ist, das an dem Basisabschnitt (2) angebracht ist, ein zweites Verbindungselement (8) mit gepaarten Stangen (9, 9), über die ein anderes Ende des ersten Verbindungselements (7) und die Halterung (14) miteinander gekoppelt sind, gepaarte erste Kugelgelenke (10, 10), über die ein Ende jeder der gepaarten Stangen (9, 9), die das zweite Verbindungselement (8) bilden, und das andere Ende des ersten Verbindungselements (7) schwingfähig miteinander gekoppelt sind, gepaarte zweite Kugelgelenke (16, 16), über die ein anderes Ende jeder der gepaarten Stangen (9, 9) und die Halterung (14) schwingfähig miteinander gekoppelt sind, und ein Zugbauteil (11, 12), das die gepaarten Stangen (9, 9) in einer Richtung vorspannt, in der die Stangen (9, 9) einander ziehen, wobei zumindest eines (10, 10, 16, 16) der ersten Kugelgelenke (10, 10) und der zweiten Kugelgelenke (16, 16) einen Kugelzapfen (30), der einen Wellenabschnitt (32) und einen kugelartigen Kopf (31) umfasst, und eine Buchse (36) aufweist, die den Kugelkopf (31) des Kugelzapfens (30) schwingfähig und schwenkmäßig bewegbar hält, aufweist, wobei der Parallelmechanismus **dadurch gekennzeichnet ist, dass**:
die Buchse (36) einen halbkugelförmigen Ausnehmungsabschnitt (34), der den kugelartigen Kopf (31) hält, von einem oberen Abschnitt zu einem Äquator desselben und einen Erstreckungsabschnitt (35) umfasst, der stufenlos durchgehend mit dem halbkugelförmigen Ausnehmungsabschnitt (34) ist und sich von dem halbkugelförmigen Ausnehmungsabschnitt (34) jenseits des Äquators des kugelartigen Kopfes (31) zu der Seite des Wellenabschnitts (32) erstreckt,
die Buchse derartig gebildet ist, dass ein Innendurchmesser einer Öffnung in dem Erstreckungsabschnitt (35) größer als oder gleich einem Durchmesser des kugelartigen Kopfes (31) ist, und
der Erstreckungsabschnitt (35) angeordnet ist, um eine Reaktionskraft aufzunehmen, die auf eine Last reagiert, die in einer Axialrichtung der Stange (9), die mit der Buchse (36) gekoppelt ist, wirkt.

2. Der Parallelmechanismus (1) gemäß Anspruch 1, **dadurch gekennzeichnet, dass** die gepaarten Stangen (9, 9) des zweiten Verbindungselements, die die mit der Buchse (36) gekoppelte Stange aufweisen, derart angeordnet sind, dass Mittelachsen der gepaarten Stangen (9, 9) parallel zueinander sind, und **dadurch**, dass der Erstreckungsabschnitt (35) im Wesentlichen zylindrisch geformt ist und sich eine Mittelachse des Erstreckungsabschnitts (35) parallel zu einer Ebene erstreckt, die durch die jeweiligen Mittelachsen der gepaarten Stangen (9, 9) definiert ist, und im Wesentlichen senkrecht zu den jeweiligen Mittelachsen der gepaarten Stangen (9, 9).

3. Der Parallelmechanismus (1) gemäß Anspruch 1 oder Anspruch 2, **dadurch gekennzeichnet, dass** eine Länge des Erstreckungsabschnitts (35) gemäß einem Durchmesser des kugelartigen Kopfs (31) eingestellt ist.

4. Der Parallelmechanismus (1) gemäß einem der Ansprüche 1 bis 3, **dadurch gekennzeichnet, dass** die Länge des Erstreckungsabschnitts (35) gemäß einer Gesamtlänge des Zugbauteils (11, 12) eingestellt ist.

5. Der Parallelmechanismus (1) gemäß einem der Ansprüche 1 bis 4, **dadurch gekennzeichnet, dass** der Kugelzapfen (30) aus Stahl hergestellt ist und eine Schale aus Harz an Innenoberflächen des halbkugelförmigen Ausnehmungsabschnitts (34) und des Erstreckungsabschnitts (35) der Buchse (36) installiert ist und die Schale (37) zwischen dem kugelartigen Kopf (31) des Kugelzapfens (30) und sowohl dem halbkugelförmigen Ausnehmungsabschnitt (34) als auch dem Erstreckungsabschnitt (35) der Buchse (36) angeordnet ist.

6. Der Parallelmechanismus (1) gemäß Anspruch 5, **dadurch gekennzeichnet, dass** ein Harzmaterial für die Schale (37) ein Fluorharz ist.

7. Der Parallelmechanismus (1) gemäß einem der Ansprüche 1 bis 6, **dadurch gekennzeichnet, dass** der Erstreckungsabschnitt (35) der Buchse (36) eine Länge von 0,5 mm aufweist.

## Revendications

1. Mécanisme parallèle (1) comprenant une partie de base (2) et une console (14) couplées l'une à l'autre en parallèle par l'intermédiaire d'une pluralité de bras (6),
chacun de la pluralité de bras (6) comprenant une première liaison (7) dont une extrémité est couplée à un actionneur (4) fixé à la partie de base (2), une deuxième liaison (8) présentant des tiges disposées par paire (9, 9) et par l'intermédiaire de laquelle l'autre extrémité de la première liaison (7) et la console (14) sont couplées l'une à l'autre, des premiers joints à rotule disposés par paire (10, 10) par l'intermédiaire desquels une extrémité de chacune des tiges disposées par paire (9, 9) composant la deuxième liaison (8) et l'autre extrémité de la première liaison (7) sont couplées de manière pivotantes entre elles, des deuxièmes joints à rotule disposés par paire (16, 16) par l'intermédiaire desquels l'autre extrémité de chacune des tiges disposées par paire (9, 9) et la console (14) sont couplées de manière pivotantes entre elles, et un élément de traction (11, 12) faisant dévier les tiges disposées par paire (9, 9) dans une direction dans laquelle les tiges (9, 9) exercent une traction l'une sur l'autre, au moins l'un (10, 10, 16, 16) des premiers joints à rotule (10, 10) et des deuxième joints à rotule (16, 16) présente un goujon de rotule (30) comportant une partie d'arbre (32) et une tête en forme de boule (31), et une console (36) maintenant de manière pivotable et déplaçable en pivotement la tête en forme de boule (31) du goujon de rotule (30), le mécanisme parallèle étant **caractérisé par le fait que**:
la console (36) comporte une partie d'évidement semi-sphérique (34) maintenant la tête en forme de boule (31) d'une partie supérieure à un équateur de cette dernière, et une partie de prolongement (35) qui prolonge sans palier la partie d'évidement semi-sphérique (34) et qui s'étend de la partie d'évidement semi-sphérique (34) au-delà de l'équateur de la tête en forme de boule (31) du côté de la partie d'arbre (32),
la console est formée de sorte qu'un diamètre intérieur d'une ouverture dans la partie de prolongement (35) soit égal ou supérieur à un diamètre de la tête en forme de boule (31), et
la partie de prolongement (35) est disposée pour recevoir une force de réaction réagissant à une charge agissant dans une direction axiale de la tige (9) couplée au support (36).

2. Mécanisme parallèle (1) selon la revendication 1, **caractérisé par le fait que** les tiges disposées par paire (9, 9) de la deuxième liaison comprenant la tige couplée à la console (36) sont disposées de sorte que les axes centraux des tiges disposées par paire (9, 9) soient parallèles entre eux, et que la partie de prolongement (35) est de forme sensiblement cylindrique, et un axe central de la partie de prolongement (35) s'étend parallèle à un plan défini par les axes centraux respectifs des tiges disposées par paire (9, 9) et sensiblement perpendiculaires aux axes centraux respectifs des tiges disposées par paire (9, 9).

3. Mécanisme parallèle (1) selon la revendication 1 ou la revendication 2, **caractérisé par le fait que** la longueur de la partie de prolongement (35) est réglée selon le diamètre de la tête en forme de boule (31).

4. Mécanisme parallèle (1) selon l'une quelconque des revendications 1 à 3, **caractérisé par le fait que** la longueur de la partie de prolongement (35) est réglée selon la longueur d'ensemble de l'élément de traction (11, 12).

5. Mécanisme parallèle (1) selon l'une quelconque des revendications 1 à 4, **caractérisé par le fait que** le goujon de rotule (30) est réalisé en acier, et qu'une coupe (37) réalisée en résine est installée sur une surface intérieure de la partie d'évidement semi-sphérique (34) et de la partie de prolongement (35) de la console (36) et la coupe (37) est interposée entre la tête en forme de boule (31) du goujon de rotule (30) et tant la partie d'évidement semi-sphérique (34) que la partie de prolongement (35) de la console (36).

6. Mécanisme parallèle (1) selon la revendication 5, **caractérisé par le fait qu'**un matériau de résine pour la coupe (37) est une résine à base de fluor.

7. Mécanisme parallèle (1) selon l'une quelconque des revendications 1 à 6, **caractérisé par le fait que** la partie de prolongement (35) de la console (36) est d'une longueur de 0,5 mm.
